Europäisches Patentamt

European Patent Office

Office européen des brevets

(19)

(11) Veröffentlichungsnummer: **0 211 184**
**B1**

(12) **EUROPÄISCHE PATENTSCHRIFT**

(45) Veröffentlichungstag der Patentschrift:
**31.05.89**

(21) Anmeldenummer: **86107894.7**

(22) Anmeldetag: **01.03.84**

(60) Veröffentlichungsnummer der früheren Anmeldung
nach Art. 76 EPÜ: **0123068**

(51) Int. Cl.⁴: **D21B 1/08**, D21B 1/32,
D21B 1/34

(54) **Einrichtung zur Entsorgung eines Stofflösers.**

(43) Veröffentlichungstag der Anmeldung:
**25.02.87 Patentblatt 87/9**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**AT-B- 356 500**
**DE-A- 2 941 439**

(73) Patentinhaber: **J.M. Voith GmbH, Postfach 1940 St. Pöltener Strasse 43, D-7920 Heidenheim(DE)**

(72) Erfinder: **Bähr, Theodor, Mühlestrasse 6, D-7920 Heidenheim(DE)**
Erfinder: **Thumm, Helmut, Robert-Koch-Strasse 64, D-7920 Heidenheim(DE)**
Erfinder: **Musselmann, Walter, Franz-Marc-Strasse 32, D-7920 Heidenheim(DE)**

ACTORUM AG

**Beschreibung**

Die Erfindung betrifft eine Einrichtung entsprechend dem Oberbegriff des Patentanspruchs 1. Ein solche Einrichtung ist bekanntgeworden durch die DE-OS 29 41 439.

Bei diesem Verfahren wird die Suspension in dem Abzugsapparat so lange umgewälzt und verdünnt bzw. gespült, bis der in der Suspension, die aus dem Stofflöser 1 abgezogen worden ist, enthaltene Schmutz von den übrigen Bestandteilen der Suspension, also insbesondere den Fasern getrennt ist und neben dem Wasser allein noch in dem Abzugsapparat verbleibt. Dann wird dieser Schmutz letztendlich aus dem Abzugsapparat durch eine getrennte Leitung abgeführt. Dies ist jedoch nicht möglich. Es wird nämlich durch die dortige Anordnung ein großer Anteil des Schmutzes so weit zerteilt, daß er mit den Fasern wieder zurück in den Stofflöser gelangt. Dieser Schmutz ist so weit zerteilt, daß er später nur noch schlecht abzuscheiden ist, obwohl es nunmehr möglich ist, daß dieser feinverteilte Schmutz das Sieb des Stofflösers nicht mehr verstopft. Auf jeden Fall muß dieser Schmutz aber später wieder entfernt werden, was große Schwierigkeiten bereiten dürfte.

Die Aufgabe der Erfindung ist es, das Verfahren so auszubliden, daß der Schmutz frühzeitig ohne Schwierigkeiten ausgeschieden werden kann.

Diese Aufgabe wird erfindungsgemäß bei einem Verfahren der eingangs genannten Art durch die Merkmale des kennzeichnenden Teils des Patentanspruchs 1 gelöst. Sehr vorteilhafte Ausgestaltungen des Verfahrens gehen aus den Unteransprüchen hervor.

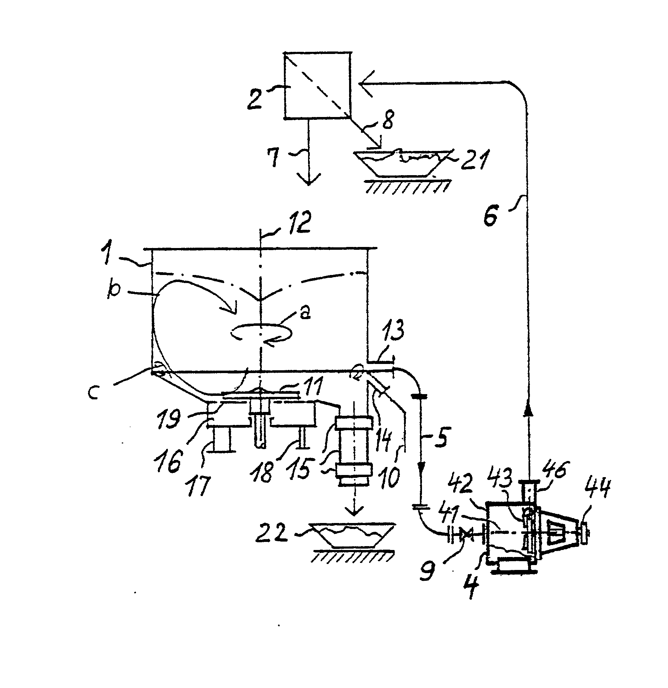

Nachfolgend wird die Erfindung anhand eines in der Zeichnung skizzenhaft dargestellten Ausführungsbeispieles erläutert.

Der Stofflöser ist hier dafür vorgesehen, bei einer hohen Konsistenz von z.B. 8 bis 16 % Altpapier aufzulösen. Dies geschieht durch die von dem Rotor 11 erfolgte Wirbelströmung b. Die Rotationsachse des Rotors 11 ist mit 12 bezeichnet und dreht sich in Richtung a. Es entstehen in den Zwickeln des Stofflösers bei c Wirbel, so daß sich dort in den Ecken des Stofflösers Schmutzanteile ansammeln.

Der Rotor 11 rotiert parallel zu einem Sieb 19, das einen Stoffabzugsraum 16 vom übrigen Behälterinhalt des Stofflösers 1 trennt. Aus diesem Abzugsraum 16 wird die Suspension über Stutzen 17 abgezogen. Über Stutzen 18 kann zu dem Zweck noch Verdünnungswasser zugeführt werden.

Es ist nun in Bodennähe seitlich am Behälter der Abzugsstutzen 13 angeordnet. Über die daran angeschlossene Leitung 5 wird Suspension periodisch nach Öffnen des Ventiles 9 dem Abzugsapparat 4 zugeführt. Dieser Abzugsapparat ist im wesentlichen rotationssymmetrisch ausgebildet mit der Rotationsachse 41. Ein Rotor 43 des Abzugsapparates 4 hat in diesem Falle eine mit der Rotationssymmetrieachse 41 fluchtende Rotationsachse. Der Rotor wird angetrieben über Riemenscheibe 44 von einem nicht dargestellten Motor. Die Leitung 5 ist an der Stirnseite 42 des Abzugsapparates 4 angeschlossen.

In dem Abzugsapparat 4 verbleibt die Suspension eine gewisse Zeit, die ausreicht, um die Altpapierfetzen und Stippen, die noch in der Suspension enthalten sind, um ein erhebliches Maß zu zerkleinern. Dann wird das Ventil 9 wieder kurzzeitig geöffnet, so daß der Rotor 43 des Abzugsapparats 4 die Suspension durch mindestens einen tangentialen Auslaß 46 hinausbefördern kann zu dem Sortiergerät 2. Gleichzeitig wird neue Suspension aus dem Stofflöser 1 nachgefördert, die dann auch in dem Abzugsapparat 4 weiter behandelt wird Dabei ist der Rotor 43 am besten direkt am tangentialen Auslaß 46 vorzusehen, um eine gute Abpumpwirkung zu erzielen. Beim Abpumpen wird die neu zuzuführende Suspension durch die Leitung 5 zentral in den Wirbelkern der Strömung im Apparat 4 hineingeleitet.

Das Sortiergerät 2 kann zweckmäßig eine um eine horizontale Achse rotierende Siebtrommel sein, der die Suspension an der einen Stirnseite zugeführt wird. Eine solche Siebtrommel ist z.B. durch die DE-AS 25 47 896 bekanntgeworden.

Man hat bei dem erfindungsgemäßen Verfahren den Vorteil, daß in dem Sortiergerät 2 eine ausreichende Trennung des Schmutzes von den Faserbestandteilen erfolgen kann. In dem Abzugsapparat 4 hingegen wird der Schmutz nicht in starkem Maße zerteilt, z.B. auch aus dem Grunde, daß man die Verweilzeit der Suspension in diesem Apparat nicht zu groß wählt und auch keine besonderen Schneid oder Trenneinrichtungen vorgesehen sind. Absperrschieber oder -Ventil 9 kann natürlich auch in der Abzugsleitung 6 vorgesehen sein. Der am Sortiergerät 2 anfallende Gutstoff wird über Leitung 7 wieder unmittelbar dem Stofflöser 1 zugeführt, während der anfallende Spuckstoff über Leitung 8 in den Behälter 21 abgelassen wird.

Die Abführung des Schwerschmutzanteils geschieht in der Hauptsache am besten im Stofflöser 1 über dessen Schwerschmutzschleuse 15 in den Aufnahmebehälter 22 hinein. Es ist auch möglich, eine entsprechende Schwerschmutzschleuse am Abzugsapparat 4 vorzusehen. Um den Eintritt in den Abzugsstutzen 13 freizuhalten und die Fasern von dem Schmutz möglichst freizuspülen, wird zweckmäßig in dem Bereich des Stofflösers, wo der Abzugsstutzen 13 angeschlossen ist, Verdünnungswasser zugeführt. Dies geschieht über den Stutzen 14 und die daran angeschlossene Leitung 10. Damit ist auch aufgrund der verringerten Konsistenz eine problemlose Abführung der Suspension in den Abzugsapparat 4 und aus diesem hinaus gewährleistet. Dieses Verdünnungswasser kann auch noch dazu benutzt werden, um in dem Stofflöser 1 die für die Auflösung des Altpapiers erforderliche Konsistenz einzustellen.

Das Aufnahmevolumen des Abzugsapparats 4 ist natürlich wesentlich kleiner als das des Stofflösers 1. Die Verweilzeit der Suspension in dem Abzugsapparat 4 kann im allgemeinen zwischen 30 Sekunden und 5, vorzugsweise 3 Minuten liegen, wohingegen die Öffnungszeit des Absperrgliedes 9 im allgemeinen etwa zwischen 3 und 5 Sekunden liegt. Diese wird man zweckmäßig so einrichten, daß ein möglichst guter, d.h. weitgehender Austausch der im Abzugsapparat 4 bereits bearbeiteten Suspension gegen frisch aus dem Stofflöser 1 zugeführte erfolgen kann. Schließlich sei noch vermerkt, daß auch andere Sortiergeräte 2 als eine Sortiertrommel benutzt werden können. So kommt z.B. insbesondere ein Vibrationssortierer in Frage.

**Patentansprüche**

1. Einrichtung zum Auflösen und Reinigen von Altpapier, mit einem Stofflöser, der einen Rotor (11) und einen Auslaß (17) für den Gutstoff sowie mindestens einen weiteren Auslaß (Sekundärauslaß 13) aufweist, dadurch gekennzeichnet, daß an den Sekundärauslaß (13) über eine Verbindungsleitung (5) ein im wesentlichen zylindrischer Behälter (14) angeschlossen ist, daß die Verbindungsleitung (5) in den zylindrischen Behälter (4) auf dessen einer Stirnseite (42) zentral einmündet, daß der zylindrische Behälter (4) wenigstens einen tangentialen Auslaß (46) aufweist, und daß an der der Einlaß-Stirnseite (42) gegenüberliegenden Stirnseite des zylindrischen Behälters (4) ein Rotor (43) vorgesehen ist.

2. Einrichtung nach Anspruch 1, dadurch gekennzeichnet, daß der tangentiale Hauptauslaß (46) im Bereich des Rotors (43) angeordnet ist.

3. Einrichtung nach einem der Ansprüche 1 oder 2, dadurch gekennzeichnet, daß der Rotor (43) zentral genau der Verbindungsleitung (5) gegenüber angeordnet ist.

**Claims**

1. An apparatus for slushing and cleaning waste paper, with a pulper having a rotor (11) and an outlet (17) for the accepts as well as at least one other outlet (secondary outlet 13), characterized in that to the secondary outlet (13) is connected, by means of a connecting pipe (5), a mainly cylindrical tank (14), that the connecting pipe (5) terminates centrally in the cylindrical tank (4) on one of its end faces (42), that the cylindrical tank (4) has at least one tangential outlet (46) and that at the end face opposite the inlet end face (42) of the cylindrical tank (4) a rotor (43) is provided.

2. An apparatus according to claim 1, characterized in that the tangential main outlet (46) is arranged in the area of the rotor (43).

3. An apparatus according to one of claims 1 or 2, characterized in that the rotor (43) is arranged centrally precisely opposite the connecting pipe (5).

**Revendications**

1. Dispositif pour la trituration et l'épuration des vieux papiers, avec un pulper qui présente un rotor 11 et un évacuation 17 pour la bonne pâte ainsi qu'au moins une autre évacuation (évacuation secondaire) 13 caractérisé par le fait qu'une cuve 14 pour l'essentiel cylindrique est raccordée à l'évacuation secondaire 13 par une tuyauterie de raccordement 5 et que la conduite de raccordement 5 débouche au centre dans la cuve cylindrique 4 par l'un des flancs (42), et que la cuve cylindrique 4 présente au moins une évacuation tangentielle 46 et qu'un rotor 43 est prévu sur le flanc opposé au flanc d'entrée de la cuve cylindrique 4.

2. Dispositif conformément à la revendication 1, caractérisé par le fait que la sortie tangentielle principale 46 est placée au droit du rotor 43.

3. Dispositif conformément aux revendications 1 et 2, caractérisé par le fait que le rotor 43 est exactement placé entré en face de la conduite de raccordement 5.